# EUROPEAN PATENT APPLICATION

(11) **EP 1 172 722 A2**
(43) Date of publication of application: **16.01.2002**
(21) Application number: 01115760.9
(22) Date of filing: 10.07.2001
(51) Int. Cl.: G06F 3/033, G09G 5/00

(54) **Display device**

(30) Priority: 12.07.2000 JP 2000211440
(71) Applicant: MATSUSHITA ELECTRIC INDUSTRIAL CO., LTD., Kadoma-shi, Osaka-fu (JP)
(72) Inventor: Ogishi, Kiyoshi, Kyoto-shi, Kyoto-fu (JP); Hirose, Takako, Hirakata-shi, Osaka-fu (JP); Kobayashi, Takuya, Neyagawa-shi, Osaka-fu (JP); Kawano, Masakazu, Habikino-shi, Osaka-fu (JP)
(74) Representative: Lang, Johannes, Dipl.-Ing.

(57) **Abstract**

A layout rule change part (21) selects one of a plurality of layout rules recorded on a layout rule table (22) according to an inputted instruction. A layout part (23) follows thus selected layout rule, and lays out each component element in a hypertext document recorded on a component element recorder (13). The result is recorded on the component element recorder (13). Based on the component elements and the layout result recorded on the component element recorder (13), a display part (17) generates screen data of a display range determined by a display range determination part (16) for display on the screen. The user makes an instruction for screen switching by using a user input part (15), and another instruction for changing the current layout rule to whichever he/she prefers by using a rule change instruction input part (20).

## Description

### BACKGROUND OF THE INVENTION

### Field of the Invention

The present invention relates to display devices for displaying information specified in a document description language designed for structured documents and, more specifically, to a display device for laying out such information, and displaying the laid-out information using a scrolling function.

### Description of the Background Art

In this advanced information age, a variety of information is accessible through the Internet. Such information is, most of the time, provided in a hypertext document format specified in a hypertext description language. Such hypertext document includes information about both logical structure and layout in addition to text information. Here, by way of example, the logical structure information includes chapter, list, and table, while the layout information includes font size, letter color, and display screen base color. The logical structure information also includes an anchor, which is link information to different documents. With the effective usage of such information (text information excluded), the resulting text written in the hypertext description language can include a variety of elements. As to the hypertext description language, the HTML (HyperText Markup Language) has been popularly used.

The hypertext document is displayed by using a browsing function provided to equipment varying in type. By taking a personal computer (hereinafter, simply referred to as PC) as an example, browser software operating on the PC analyzes the hypertext document, and displays it on the screen. To scroll and switch the screens displaying the hypertext document, the PC user inputs any corresponding instruction through a mouse and keyboard.

The browsing function is currently provided in small-sized electronic equipment such as a mobile terminal. For example, a mobile terminal with the browsing function analyzes a hypertext document received over the Internet, and displays the document on its screen. In this case, the hypertext document is so displayed as to fit in the small screen of the mobile terminal, not always displayed according to the logical structure and layout information included in the hypertext document. Further, input means provided on the mobile terminal with such small screen is limited to a few input keys, a joystick, and a jogdial, for example. Therefore, in order to display the hypertext document on the screen of the mobile terminal, the technique for document display and screen switching/scrolling should be different from that for the PC.

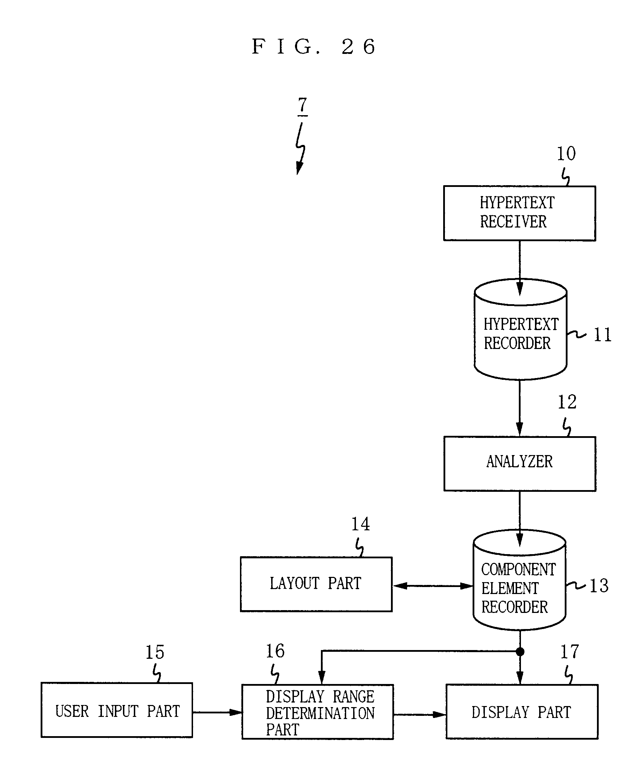

FIG. 26 is a block diagram showing the structure of a conventional hypertext display device. In FIG. 26, a hypertext display device 7 includes a hypertext receiver 10, a hypertext recorder 11, an analyzer 12, a component element recorder 13, a layout part 14, a user input part 15, a display range determination part 16, and a display part 17. The hypertext display device 7 is included in electronic equipment such as a mobile terminal with a small display screen.

The hypertext receiver 10 receives a hypertext document from a data server (not shown) over a communications line, and records it onto the hypertext recorder 11. The hypertext document thus recorded on the hypertext recorder 11 is analyzed by the analyzer 12, and the result is recorded onto the component element recorder 13. The result recorded on the component element recorder 13 is then laid out by the layout part 14 on a component element basis, and the resulting layout is recorded onto the component element recorder 13.

The user input part 15 includes a plurality of input keys such as an up key, a down key, a right key, a left key, and the like. The user pushes any corresponding key to instruct the hypertext display device 7 to switch display screens, for example. Here, in the hypertext display device 7, the up and down keys are presumably the ones to change the display range in one hypertext document, and other keys are assigned other operations. By following an inputted instruction for screen switching, the display range determination part 16 determines the display range of the hypertext document. This determination is made by referring to the layout result recorded on the component element recorder 13. The display part 17 then generates, based on the component elements and the layout result, screen data of the display range determined by the display range determination part 16 for display on the screen.

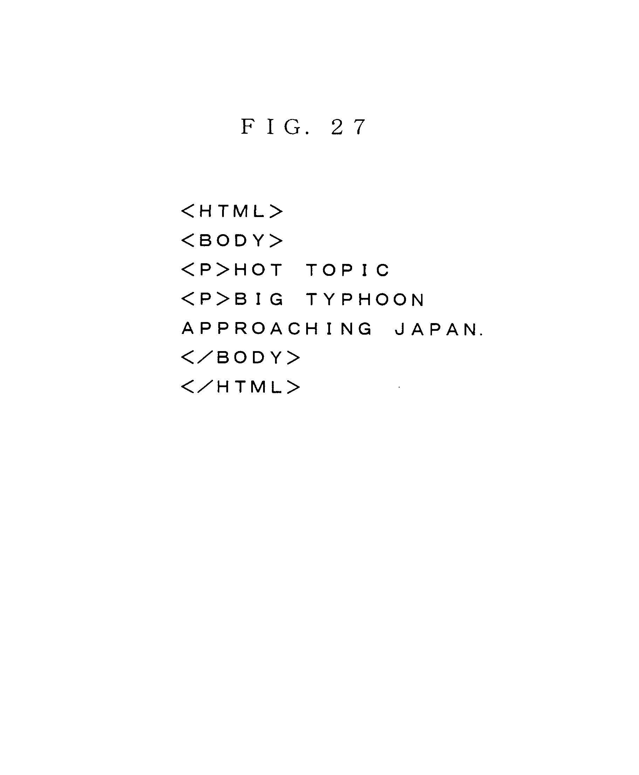

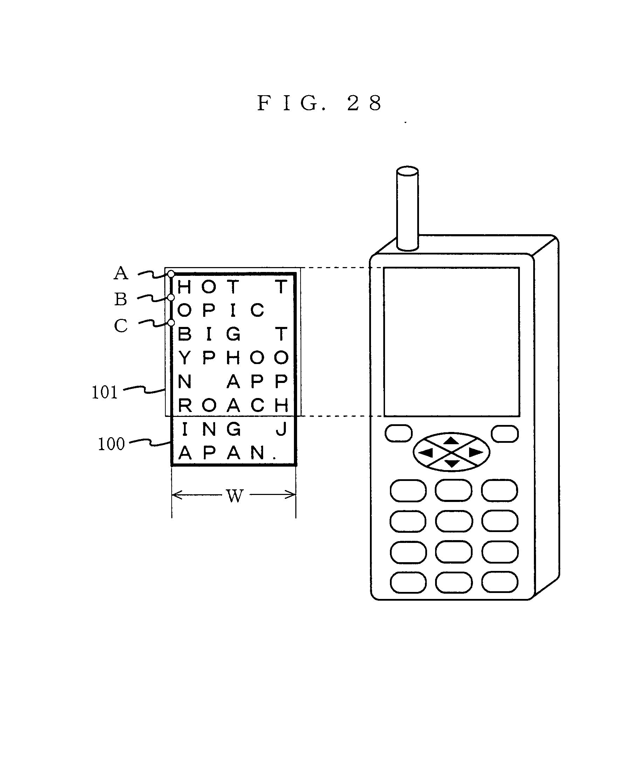

FIG. 27 shows an exemplary HTML document including only a text element. In the conventional hypertext display device 7, the layout part 14 lays out the text element in the hypertext document based on a screen width *W* of the display part 17. For example, if the display screen is 5 letters by 6 rows in size, the resulting layout looks as shown in FIG. 28, carrying five letters in each row. Hereinafter, any screen derived by laying out each component element according to the layout result is referred to as a virtual screen. In the example of FIG. 28, a virtual screen 100 is 5 letters by 8 rows in size.

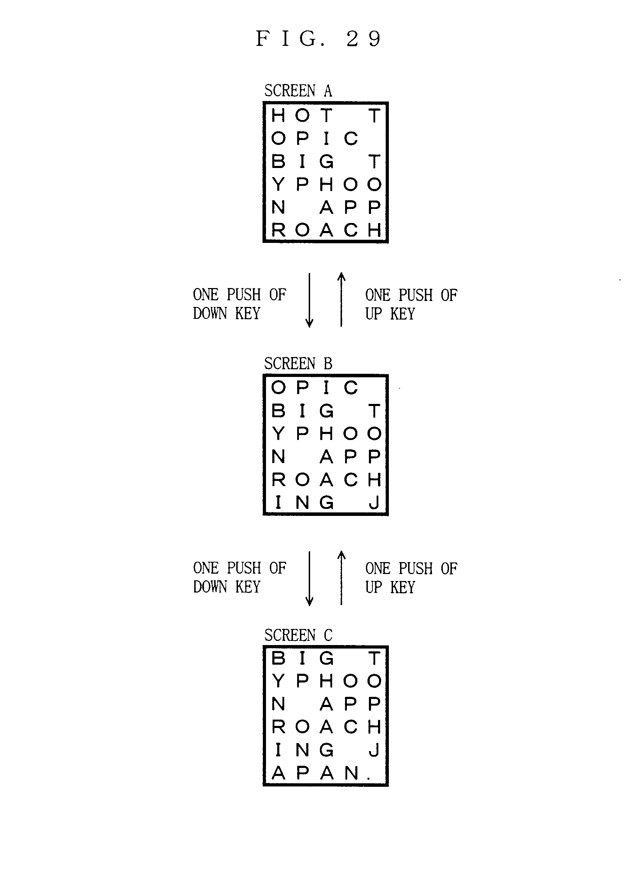

Out of the virtual screen, the display part 17 displays the range determined by the display range determination part 16. To display as such, a rectangular region 101 equal in size to the display screen is exemplarily placed over the virtual screen, and the range fit in the rectangular region 101 is to be displayed. As to the rectangular region 101, an upper left point is referred to as a display start point. As an example, when the display start point is a point *A* shown in FIG. 28, the display part 17 displays a screen *A* of FIG. 29.

FIG. 29 shows a change of the display screen displaying the HTML document of FIG. 27. When any input is made to the user input part 15 by the push of the up key or the down key, the display start point moves up or down a row. With the movement, the display screen is accordingly scrolled down or up a row. When the screen *A* of FIG. 29 is displayed, one push of the down key moves the display start point from the point *A* to a point *B* of FIG. 28, and a screen *B* of FIG. 29 is then displayed. With one more push of the down key, the display start point moves to a point *C* of FIG. 28, and a screen *C* of FIG. 29 is accordingly displayed. As such, the text element is laid out based on the width of the display screen, and the display start point is allowed only to move up and down. In this method, with only the up and down keys, the text element can be entirely displayed through screen scrolling.

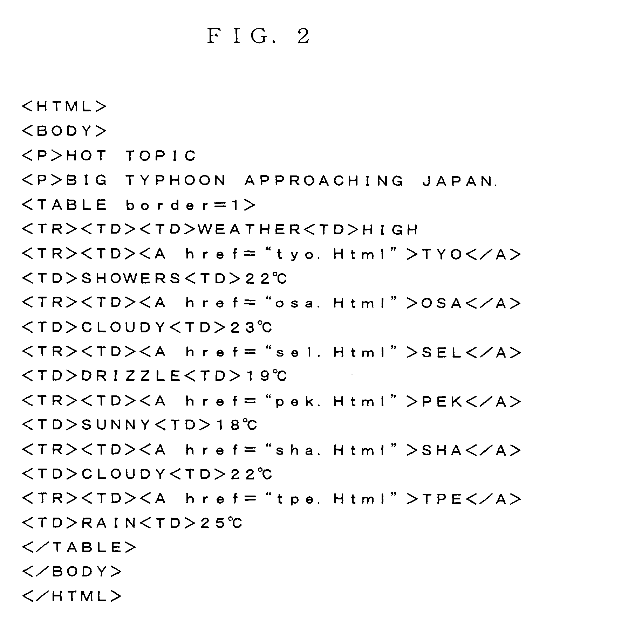

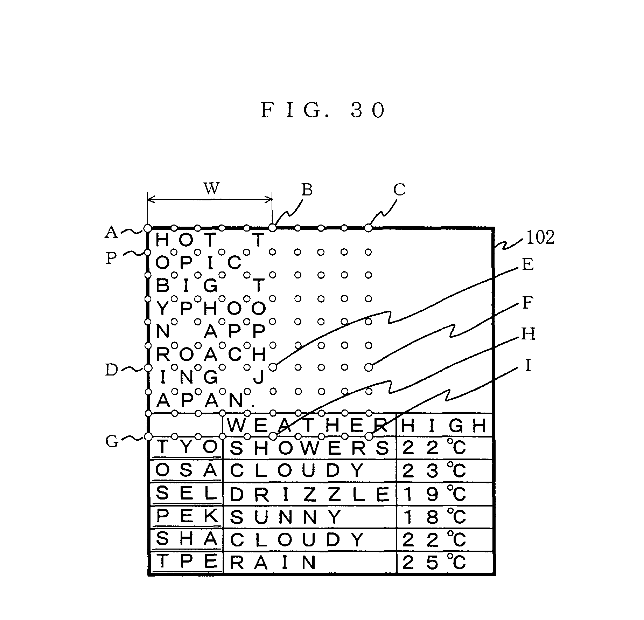

However, the above method is not considered suitable if displayed is a table element or an image element, for example. In the below, described are three known methods which have been considered suitable for displaying the table element. First, described is a first method for laying out a table element without any change in its shape, and moving a display start point by a letter responding to a key push. By referring to FIGS. 2, 30, and 31, the first method is described in more detail. FIG. 2 shows an exemplary HTML document including a table element. In the conventional hypertext display device 7, the layout part 14 lays out a table element and an image element according to layout information written in the hypertext document. In this manner, the resulting image is a virtual image 102 of FIG. 30. Note that in FIG. 30, small circles each denote the display start point, and underlined letter strings mean as each being an anchor.

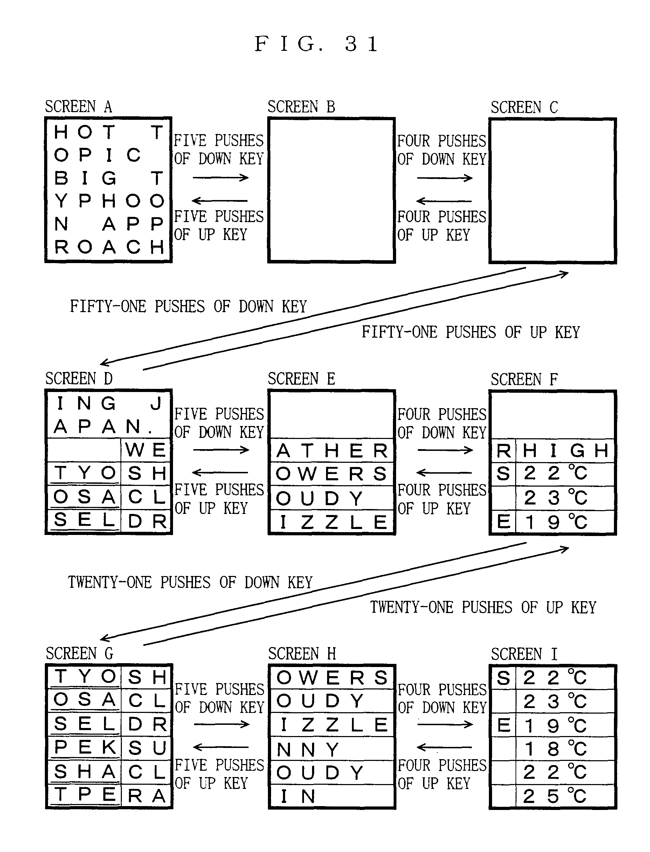

FIG. 31 is a diagram showing a change of the display screen displaying the HTML document of FIG. 2. When a screen *A* of FIG. 31 is displayed, a push of the down key moves the display start point to the right by a letter. Accordingly, five pushes of the down key will move the display start point from a point *A* to a point *B* of FIG. 30. With the movement of the display start point, the display screen is scrolled to the right by a letter, and eventually the screen *A* is switched to a screen *B* of FIG. 31. Four more pushes of the down key move the display start point to a point *C* of FIG. 30, and the screen *B* is switched to a screen *C* of FIG. 31. With one more push of the down key, the display start point moves to a point *P* of FIG. 30. As such, the display start point moves responding to any push of the down key, and the display screen is switched responding to the movement of the display start point. Specifically, in FIG. 30, the display start point then moves from the point *P* to points *D, E, F, G, H,* and eventually a point *I,* and the screen *C* is switched to screens *D, E, F, G, H,* and eventually a screen *I*. In this manner, with the screen *A* displayed, 99 pushes of the down key will lead to the screen *I*.

As such, with the first method for displaying the table element, the table element can be entirely displayed through screen scrolling and switching by using only the up and down keys. As to a second method, the table element is squeezed in to fit in the display screen widthwise, and accordingly all columns included in the table element are displayed at the same time. With the second method also, used for displaying the table element are only the up and down keys. As to a third method, any text element included in a table element is extracted and displayed.

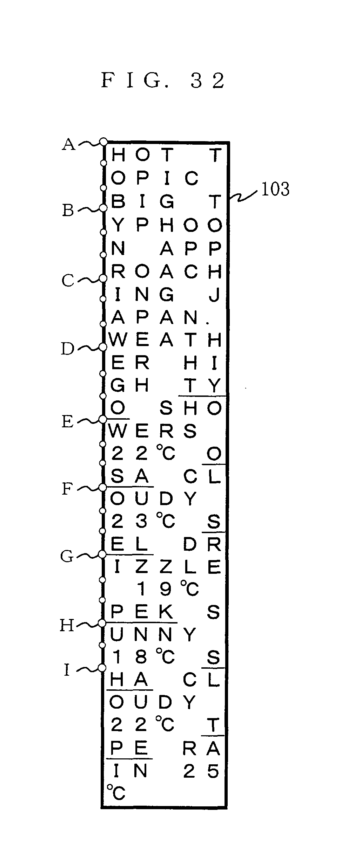

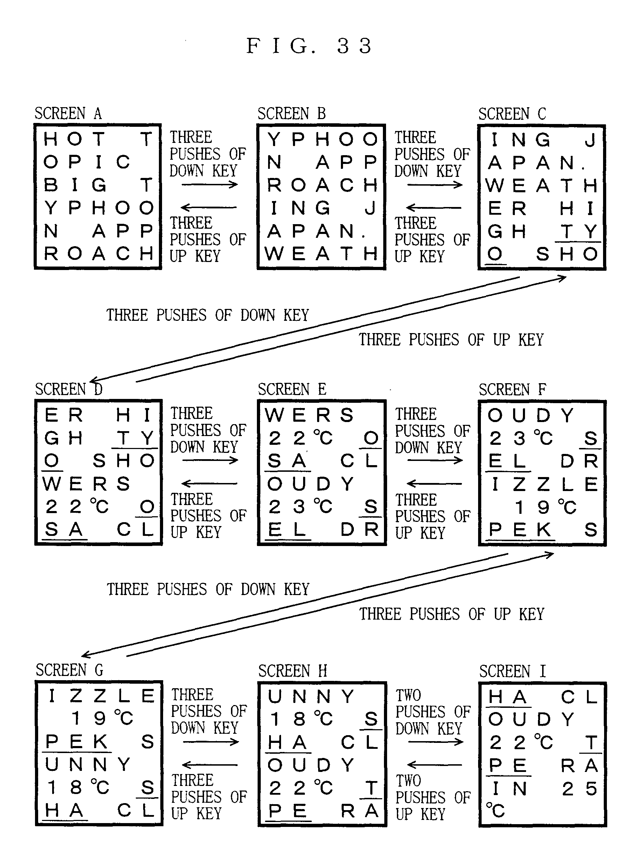

Under the third method, although being supposed to lay out a table element in a table, the layout part 14 extracts any text element from table elements, and lays out the extracted text element as text. The resulting image is a virtual image 103 of FIG. 32. The display start point in the virtual image 103 moves up or down a row responding to any up-key or down-key input to the user input part 15, and the display screen is switched as shown in FIG. 33. When the current display screen is a screen *A* shown in FIG. 33, the display start point moves down a row responding to a push of the down key, and the display screen is scrolled up a row. Specifically, in response to one push of the down key, the display start point moves from a point *A* to points *B, C, D, E, F, G, H,* and eventually a point *I* of FIG. 32. With such movement of the display start point, the screen *A* is switched to screens *B, C, D, E, F, G, H,* and eventually a screen *I* as shown in FIG. 33.

However, those three methods bear each different problem. To be specific, with the first method, the display screen is scrolled sideways based on a component element widest in width, regardless of the layout result derived for each component element. In this manner, even if no table element is displayed but only the text element, the display screen is scrolled sideways, and consequently the blank screen appears. Thus, to see the entire hypertext document through screen scrolling, the user has to keep pushing any corresponding key for a number of times. Further, the user has no clue about the width of the virtual screen until the display screen is scrolled up. For example, with the screen *B* of FIG. 31 displayed, the user cannot know to which direction he/she is supposed to scroll the display screen. Even if the user correctly scrolls the display screen to the right, he/she has no way of knowing how long such blank screens as the screens *B* and *C* continue.

The problem of the second method is that one column width cannot be narrowed down beyond the font size of a letter. Thus, the second method is not considered appropriate if the table element to be displayed carries too many columns. This often happens especially with the small display screen of the mobile terminal.

Further, the table element displayed under the third method fails in conveying the relationship between row and column. Therefore, the user may not correctly interpret the table element as he/she is expected.

Here, switching between the first and third methods depending on the user input may be a possibility to overcome the above problems. However, the problem of not conveying the relationship between row and column is not yet solved since this switching between two methods merely changes the handling of the table element, specifically, whether the table element is handled as the table element or as the text element.

### SUMMARY OF THE INVENTION

Therefore, an object of the present invention is to provide a display device capable of effectively performing screen switching through the change of layout rules and user input process rules by key operation. With such display device, even if displayed on a display screen is an element exceeding in width and being laid out without any change in its shape, the element is appropriately handled.

The present invention has the following features to attain the object above.

A first aspect of the present invention is directed to a display device for displaying, on a display screen, information specified in a document description language for a structured document, and performing a screen switching in response to a user input. The display device comprises: an analysis part for analyzing the information, and dividing the information into a plurality of component elements; a rule change instruction part for making an instruction for a change of layout rules to be applied to the information; an layout rule change part for selecting one of the layout rules responding to the instruction from the rule change instruction part; a layout part for laying out each of the component elements derived by the analysis part according to the layout rule selected by the layout rule change part; a user input part for receiving the user input; a display range determination part for determining a display range of the information based on the user input; and a display part for generating screen data of the display range determined by the display range determination part based on the component elements derived by the analysis part and a layout result of each of the component elements, and displaying the screen data on the display screen.

As described above, in the first aspect, by changing the layout rule to be applied to the information to be displayed, the display format for the information is accordingly changed. Therefore, even if any component element exceeding the display screen in width is to be displayed such as a table element and an image element, the display format is appropriately selected for displaying such component element.

In the first aspect, the information may include at least one or more of a text element, a table element, and an image element, and the document description language may be a markup language or a hypertext description language.

Also, the rule change instruction part may receive the user input, and make the instruction for the change of the layout rules. In this manner, if displayed is a table element, an image element, and the like, the display format can be appropriately selected based on the user input.

Alternatively, the rule change instruction part may refer to the display range determined by the display range determination part, and make the instruction for the change of the layout rules based on an attribute of each of the component elements included in the display range. In this manner, before displaying a table element, an image element, and the like, any possibility of the layout result exceeding in width of the display screen is taken into consideration, and even if it happens, the display format can be appropriately and automatically selected.

Also, each of the layout rules included in the layout rule change part may define a layout method for each type of the component elements of the information. In this manner, for example, a text element is displayed based on the display screen widthwise, and a table element and an image element are displayed according to layout information written in the information to be displayed.

Further, the layout rules to be selected by the layout rule change part may include one type of layout rule for laying out a table element included in the information in a table structure. In this manner, the table element can be displayed while successfully conveying the relationship between row and column. Thus, the user can correctly interpret the table element as he/she is expected.

According to a second aspect, in the first aspect, the display device further comprises a user input process rule change part for selecting one of a plurality of user input process rules applicable to the user input according to the instruction from the rule change instruction part. Herein, the display range determination part follows the user input process rule selected by the user input process rule change part, and determines the display range of the information based on the user input.

As described above, in the second aspect, the layout rule and the user input process rule are interrelated to each other, whereby the layout rule and the user input process rule are to be appropriate to each other.

More preferably, the rule change instruction part may instruct, at the same time, the layout rule change part for the change of the layout rules, and the user input process rule change part for the change of the user input process rules. In this manner, the layout rule and the user input process rule can be always appropriate to each other, thereby improving the equipment operability.

A third aspect of the present invention is directed to a display device for displaying, on a display screen, information specified in a document description language for a structured document, and performing a screen switching in response to a user input. The device comprises: an analysis part for analyzing the information, and dividing the information into a plurality of component elements; a layout part for laying out each of the component elements derived by the analysis part; a user input part for receiving the user input; a rule change instruction part for making an instruction for a change of user input process rules to be applied to the user input; a user input process rule change part for selecting one of the user input process rules according to the instruction from the rule change instruction part; a display range determination part for following the user input process rule selected by the user input process rule change part, and determining a display range of the information based on the user input; and a display part for generating screen data of the display range determined by the display range determination part based on the component elements derived by the analysis part and a layout result of each of the component elements, and displaying the screen data on the display screen.

As described above, in the third aspect, by changing the user input process rule applicable to the user input, the process assigned to the user input can be changed. In this manner, even if any component exceeding the display screen in width is to be displayed such as a table element and an image element, every user input is assigned an appropriate process, thereby improving the equipment operability.

In the third aspect, the information may include at least one or more of a text element, a table element, and an image element, and the document description language may be a markup language or a hypertext description language.

Also, the rule change instruction part may receive the user input, and make the instruction for the change of the user input process rules. In this manner, to display a table element, an image element, and the like, by changing the process assigned to the user input, the equipment operability can be improved.

Alternatively, the rule change instruction part may refer to the display range determined by the display range determination part, and make the instruction for the change of the user input process rules based on an attribute of each of the component elements included in the display range. In this manner, before displaying a table element, an image element, and the like, any possibility of the layout result exceeding in width of the display screen is taken into consideration, and even if it happens, the display format can be appropriately and automatically selected. Accordingly, the equipment operability can be improved.

Also, each of the user input process rules included in the user input process rule change part may define a process assigned to each type of the user input. In this manner, the process can be accordingly changed, for example, when a text element is displayed, the display screen may be scrolled only up and down, and when displayed is a table element and an image element, the display screen may be scrolled across.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a hypertext display device according to a first embodiment of the present invention;
FIG. 2 shows an exemplary HTML document including a table element;
FIG. 3 is a diagram showing exemplary contents of a component element recorder in the hypertext display device of the first embodiment;
FIG. 4 shows exemplary contents of a layout rule table in the hypertext display device of the first embodiment;
FIG. 5 is a flowchart showing the operation of the hypertext display device of the first embodiment;
FIG. 6 shows an exemplary virtual screen under a first layout rule in the hypertext display device of the first embodiment;
FIG. 7 shows exemplary changes of the display screen under the first layout rule in the hypertext display device of the first embodiment;
FIG. 8 shows an exemplary virtual screen under a second layout rule in the hypertext display device of the first embodiment;
FIG. 9 shows exemplary changes of the display screen under the second layout rule in the hypertext display device of the first embodiment;
FIG. 10 shows an exemplary virtual screen under a third layout rule in the hypertext display device of the first embodiment;
FIG. 11 shows exemplary changes of the display screen under the third layout rule in the hypertext display device of the first embodiment;
FIG. 12 is a block diagram showing the modified structure of the hypertext display device of the first embodiment;
FIG. 13 is a block diagram showing the structure of a hypertext display device according to a second embodiment of the present invention;
FIG. 14 shows exemplary contents of a user input process rule table in the hypertext display device of the second embodiment;
FIG. 15 is a flowchart showing the operation of the hypertext display device of the second embodiment;
FIG. 16 shows an exemplary virtual screen under a second user input process rule in the hypertext display device of the second embodiment;
FIG. 17 shows exemplary changes of the display screen under the second user input process rule in the hypertext display device of the second embodiment;
FIG. 18 shows an exemplary virtual screen under a third user input process rule in the hypertext display device of the second embodiment;
FIG. 19 shows exemplary changes of the display screen under the third user input process rule in the hypertext display device of the second embodiment;
FIG. 20 shows a block diagram showing the modified structure of the hypertext display device of the second embodiment;
FIG. 21 is a block diagram showing the structure of a hypertext display device according to a third embodiment of the present invention;
FIG. 22 is a flowchart showing the operation of the hypertext display device of the third embodiment;
FIG. 23 shows an exemplary virtual screen under a second rule setting in the hypertext display device of the third embodiment;
FIG. 24 shows exemplary changes of the display screen under the second rule setting in the hypertext display device of the third embodiment;
FIG. 25 is a block diagram showing the modified structure of the hypertext display device of the third embodiment;
FIG. 26 is a block diagram showing the structure of a conventional hypertext display device;
FIG. 27 shows an exemplary HTML document including no table element;
FIG. 28 shows an exemplary virtual screen for the case that displayed thereon is an HTML document including no table element in the conventional hypertext display device;
FIG. 29 shows exemplary changes of the display screen for the case that displayed thereon is an HTML document including no table element in the conventional hypertext display device;
FIG. 30 shows an exemplary virtual screen for the case that displayed thereon is an HTML document including a table element in the conventional hypertext display device having a conventional first method applied;
FIG. 31 shows exemplary changes of the display screen for the case that displayed thereon is an HTML document including a table element in the conventional hypertext display device having the conventional first method applied;
FIG. 32 shows an exemplary virtual screen for the case that displayed thereon is an HTML document including a table element in the conventional hypertext display device having a conventional third method applied; and
FIG. 33 shows exemplary changes of the display screen for the case that displayed thereon is an HTML document including a table element in the conventional hypertext display device having the conventional third method applied.

### DESCRIPTION OF THE PREFERRED EMBODIMENTS

By referring to the accompanying drawings, described in detail below are embodiments of the present invention. Here, each display device of the embodiments is included in electronic equipment with a small-sized screen such as a mobile terminal and a personal digital assistant, and displays a hypertext document written in the hypertext description language (hereinafter, such display device is referred to a hypertext display device).

In the below, although the hypertext description language is exemplified for the document description language to write any structured document, any language will do as long as it is for describing a text element, a table element, and an image element, for example, and the display state of the resulting document is determined on the display device side. Here, the document description language includes the so-called markup language and hypertext description language, but this is not restrictive. Note that, however, any document written by general document editing software is not a concern in the present invention as its display state is determined by the software. In the accompanying drawings showing virtual screens, white circles each denote a display start point.

### (First Embodiment)

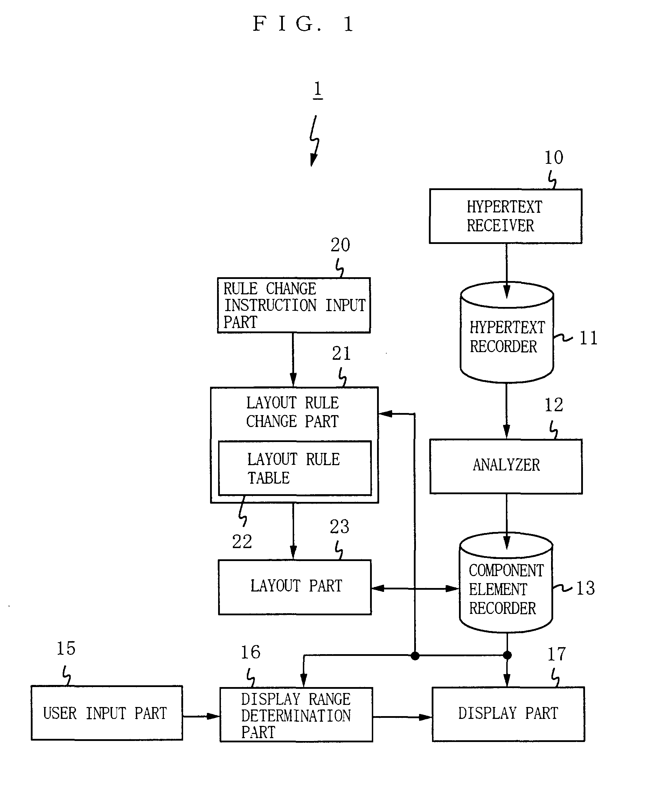

FIG. 1 is a block diagram showing the structure of a hypertext display device according to a first embodiment. In FIG. 1, a hyper text display device 1 includes the hypertext receiver 10, the hypertext recorder 11, the analyzer 12, the component element recorder 13, a rule change instruction input part 20, a layout rule change part 21, a layout part 23, the user input part 15, the display range determination part 16, and the display part 17. The layout rule change part 21 includes a layout rule table 22 including a plurality of layout rules. The hypertext display device 1 is characterized in changing among the layout rules to be applied to a hypertext document corresponding to an input coming from the rule change instruction input part 20. Here, any constituent similar to that in the hypertext display device 7 of FIG. 28 is under the same reference numeral.

The hypertext receiver 10 receives a hypertext document from a data server (not shown) wirelessly or over a communications line exemplified by a telephone line and an ISDN line, and provides the document to the hypertext recorder 11. Alternatively, the hypertext receiver 10 may read a hypertext document recorded on a hard disk drive, for example, for recording onto the hypertext recorder 11. The hypertext recorder 11 records the hypertext document outputted from the hypertext receiver 10.

The analyzer 12 analyzes the hypertext document recorded on the hypertext recorder 11, and then the result derived thereby is recorded onto the component element recorder 13. The hypertext document is divided into component elements such as a text element, a table element, and an image element, for example, and recorded on the component element basis. In accordance with the layout rule specified by the layout rule change part 21, the layout part 23 lays out the component elements recorded on the component element recorder 13, and provides the resulting layout to the component element recorder 13.

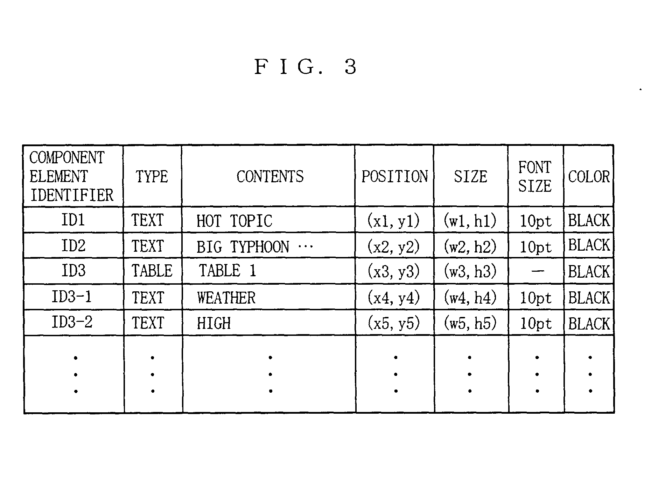

The component element recorder 13 records, as a set, the analysis result provided by the analyzer 12 and the layout result by the layout part 23. FIG. 3 shows exemplary component element data to be recorded in the component element recorder 13. FIG. 3 shows exemplary component element data derived by analyzing the HTML document of FIG. 2. This component element data is the one to be recorded on the component element recorder 13. In the table of the component element data, each component element occupies a row, which includes data of element type, contents, position, size, font size, color, and the like. Among those, the position data and the size data are derived by the layout part 23, and the rest are by the analyzer 12.

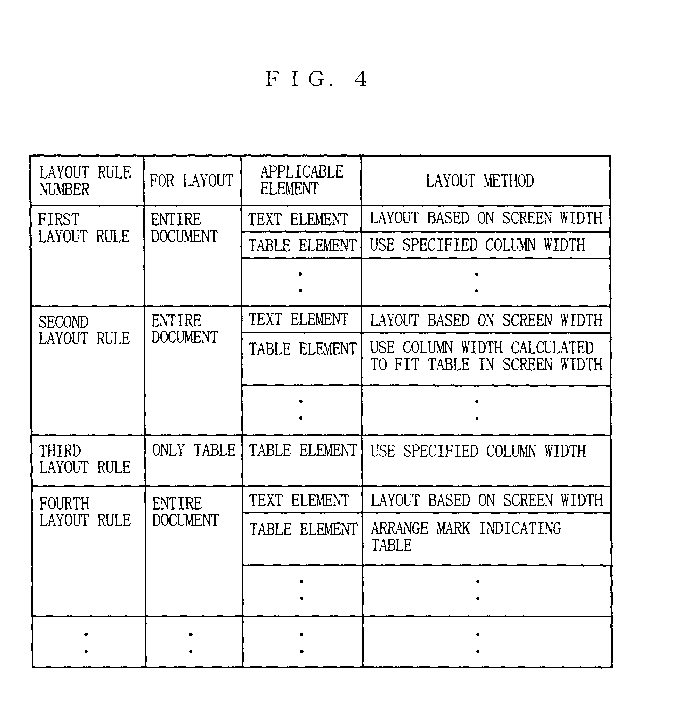

As shown in FIG. 4, the layout rule table includes a plurality of layout rules to be referred to by the layout part 23. Those layout rules each define a layout method on the component element basis. Here, the layout rule table 22 is one constituent of the hypertext display device 1 having a function of recording the layout rules, and is different from a table element included in a hypertext document.

In the layout rule table of FIG. 4, a first layout rule defines a document layout, in its entirety, wherein a text element is laid out based on a screen width, and a table element based on column widths specified for the document. A second layout rule defines a document layout, in its entirety, wherein a text element is laid out based on a screen width, and a table element based on column widths calculated not to exceed the screen width. A third layout rule defines a layout of only a table element by using specified column widths. A fourth layout rule defines a document layout, in its entirety, wherein a text element is laid out based on a screen width, and a table element is indicated by a mark.

Herein, the table of FIG. 4 is just an example of the layout rule table, and the number and the contents of the layout rules therein are generally arbitrary. To make the effects of the present invention more apparent, the layout rule table preferably includes such layout rule as the first layout rule defining a table element as being laid out in the table structure.

The user of the hypertext display device 1 inputs an instruction to the rule change instruction input part 20 for a change of the layout rule, which is used by the layout part 23. The rule change instruction input part 20 then outputs the inputted instruction to the layout rule change part 21. Whenever the instruction comes , the layout rule change part 21 responsively makes a selection from the layout rule table 22, and outputs the selected layout rule to the layout part 23.

The user input part 15 includes a plurality of input keys such as an up key, a down key, a right key, a left key, and the like. The user pushes any corresponding key to instruct the hypertext display device 1 to switch display screens, for example. The user input part 15 then outputs the user's key input to the display range determination part 16. Here, the user input part 15 is not restricted in type as long as it receives the user's instruction. For example, the user input part 15 may be a joystick and a jogdial, for example.

By following the inputted instruction for screen switching, the display range determination part 16 determines the display range of the hypertext document. This determination is made by referring to the layout result recorded on the component element recorder 13. The display part 17 then generates, based on the component element and the layout result recorded on the component element recorder 13, screen data of the display range determined by the display range determination part 16 for display on the screen.

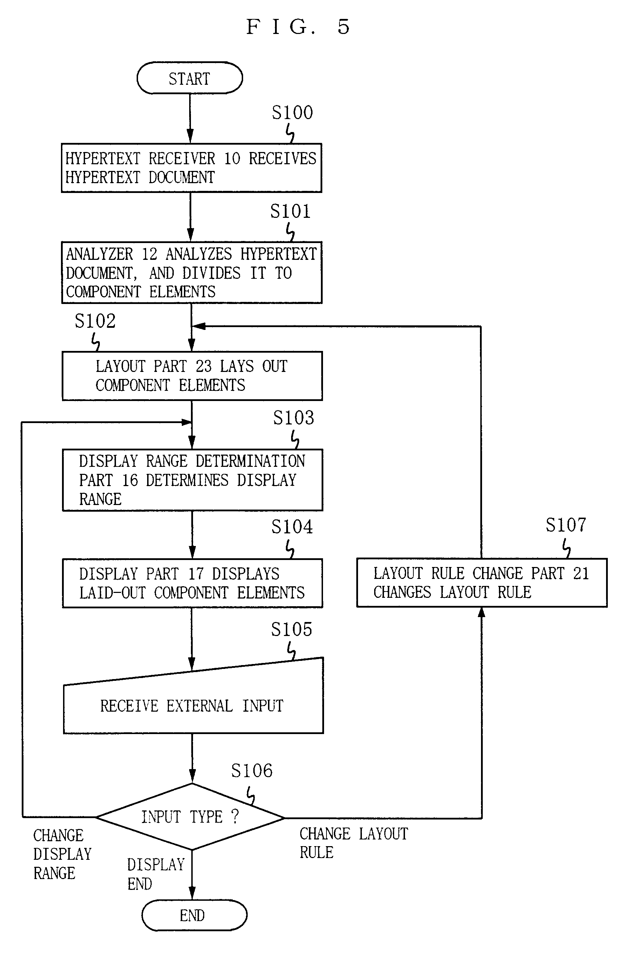

FIG. 5 is a flowchart showing the operation of the hypertext display device 1. By referring to FIG. 5, described now is the operation of changing the display range of the received hypertext document for display.

First, the hypertext receiver 10 receives a hypertext document, and provides it onto the hypertext recorder 11 (step S100). Then, the analyzer 12 analyzes the recorded hypertext document, divides it into component elements, and provides those to the component element recorder 13 (step S101). The layout part 23 then lays out those component elements recorded on the component element recorder 13 by following any layout rule specified by the layout rule change part 21. The layout result is then recorded onto the component element recorder 13 (step S102).

Then, by referring to the layout result, the display range determination part 16 determines a display range responding to the instruction for screen switching coming from the user input part 15 (step S103). Based on the component elements and the layout result recorded on the component element recorder 13, the display part 17 generates screen data of the display range determined by the display range determination part 16, and displays the data on the screen (step S104). After step S104 is through, the hypertext document is partially displayed on the screen.

The hypertext display device 1 is now ready for any external input (step S105). If the hypertext display device 1 receives any input from the user input part 15 for the display range change, the procedure returns to step S103 (step S106) for another display range.

In step S106, if any instruction comes from the rule change instruction input part 20 for the layout rule change, the procedure goes to step S107. In step S107, responding to the instruction of layout rule change, the layout rule change part 21 makes a selection from the layout rule table 22, and outputs the selected layout rule to the layout part 23. Then, the procedure returns to step S102 for laying out the hypertext document in accordance with the newly selected layout rule.

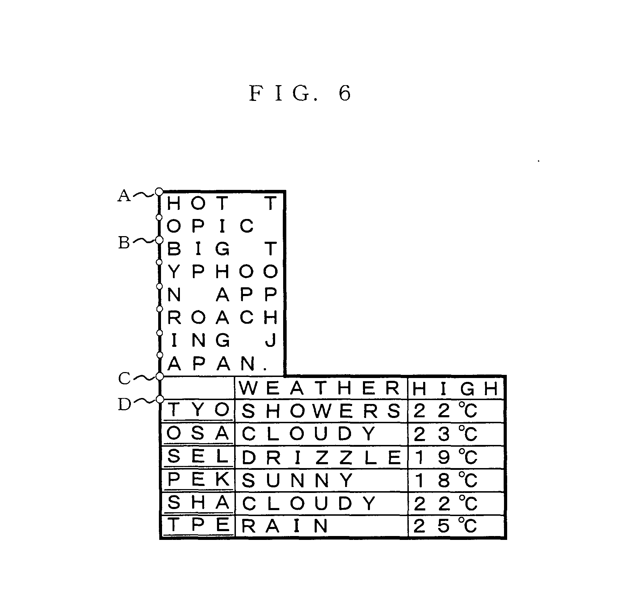

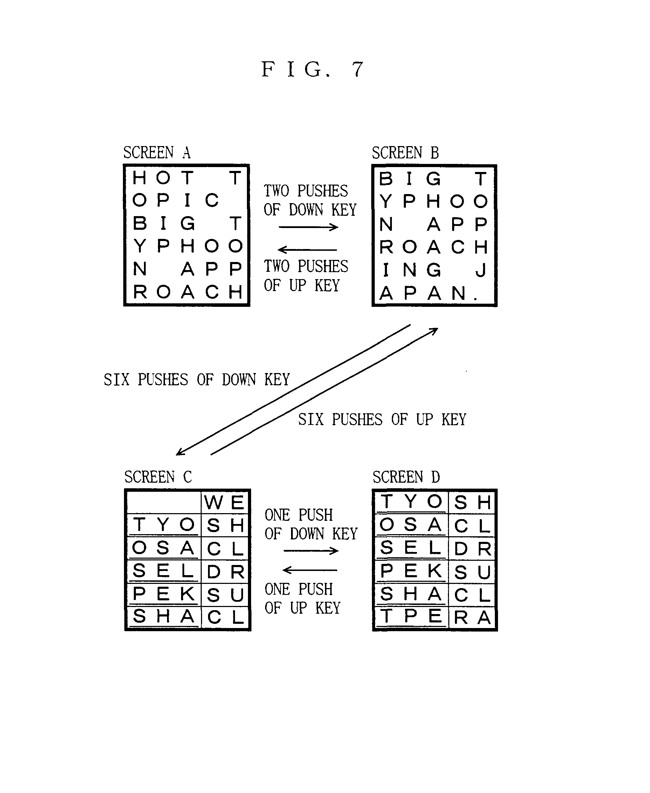

Referring to FIGS. 6 to 11, described now are the effects achieved by the layout rule change. FIGS. 6, 8, and 10 show virtual screens showing the HTML document of FIG. 2 laid out according to the first to third layout rules, respectively. FIGS. 7, 9, and 11 each show the change of the display screen in the case that the HTML document of FIG. 2 is laid out according to the first to third layout rules.

With the first layout rule, as shown in FIG. 6, a table element is laid out based on column widths written in the hypertext document. In FIG. 6, the display start point moves up and down a row in a range from a point *A* down to a point *D* responding to a key input. As shown in FIG. 7, when a screen *A* is displayed, two pushes of the down key scroll the screen up by two rows, and a screen *B* appears. Six more pushes of the down key will display a screen *C*. One more push of the down key then displays a screen *D*.

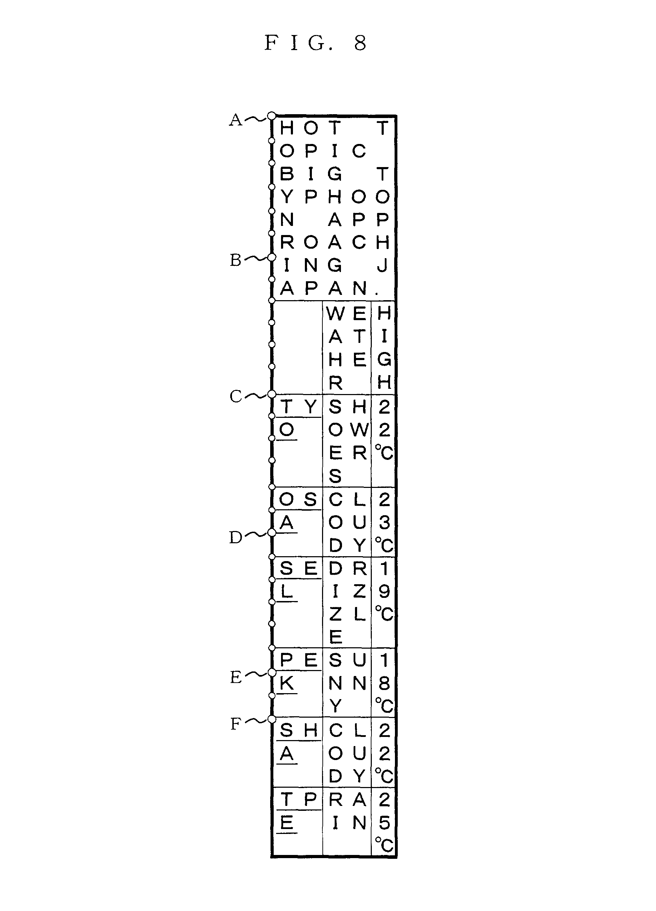

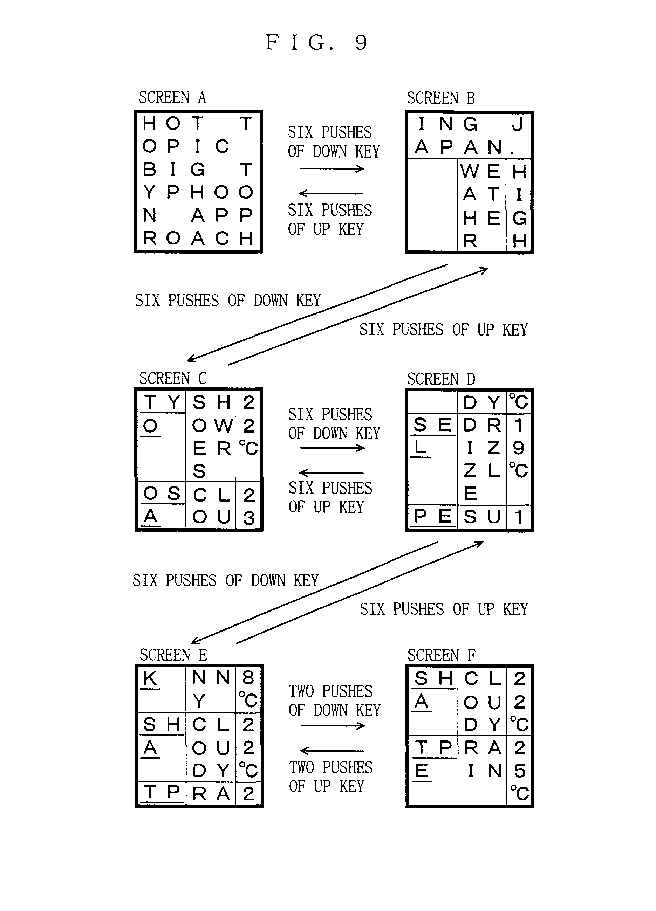

With the second layout rule, as shown in FIG. 8, the table element is laid out based on column widths calculated by dividing a screen width by the number of rows. The display start point denoted by a small circle in FIG. 8 moves up and down a row responding to a key input. As shown in FIG. 9, when a screen *A* is displayed, six pushes of the down key scroll the screen up by two rows, and a screen *B* appears. Six more pushes of the down key will display a screen *C*. Thereafter, six pushes, six pushes, and then two pushes of the down key will lead to screens *D*, E, and then a screen *F*.

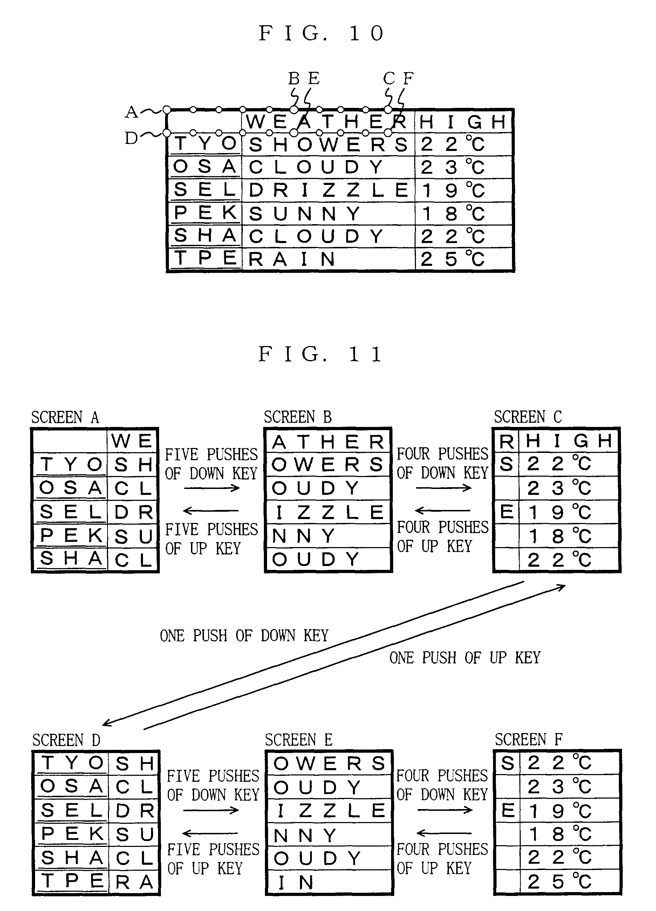

With the third layout rule, as shown in FIG. 10, the table element is laid out based on column widths written in the hypertext document. The display start point in FIG. 10 moves to the right by a letter or down a row responding to a key input, specifically, from a point *A* to points *B, C, D, E,* and eventually a point *F*. As shown in FIG. 11, when a screen *A* is displayed, five pushes of the down key scroll the screen to the right by 5 letters, and a screen *B* appears. Four more pushes of the down key will scroll the screen to the right by four more letters, and a screen *C* is displayed. With one more push of the down key, the display start point returns to the left end of the virtual screen, and the screen is scrolled up a row. With the movement of the display start point, a screen *D* is displayed. Thereafter, five pushes, and then four pushes of the down key will lead to a screen *E*, and then a screen *F*.

By changing the current layout rule to whichever the user prefers, he/she can find the table element displayed in his/her preferred format. Accordingly, with the first layout rule selected, the display screen does not scroll sideways . Thus, even when the table element to be displayed is longer in width than the display screen, the document can be entirely displayed in a shorter time by being scrolled only up and down. With the second layout rule selected, the table element is squeezed to fit in the display screen widthwise. Thus, the document including the table element can be entirely displayed by being scrolled only up and down. With the third layout rule selected, the table element is displayed as has been originally expected. Thus, even when the table element to be displayed is longer in width than the display screen, the table element can be displayed in a format easy for the user to understand. As such, if the user sees any blank screen as the screen *B* of FIG. 31, he/she may select any appropriate layout rule and change the display format to reduce the number of key pushes.

As described in the foregoing, in the hypertext display device of the present embodiment, the inputted hypertext document is divided into a plurality of component elements, and laid out according to the selected layout rule, which is responsively changed by the user's input. The display range of the hypertext document is determined by the user's input, and then screen data of the determined display range is generated for display on the screen.

In this manner, by changing the current layout rule to another, the hypertext document can be displayed in more appropriate display format. This is especially applicable to a case where a table element or an image element to be displayed surpasses the display screen in width.

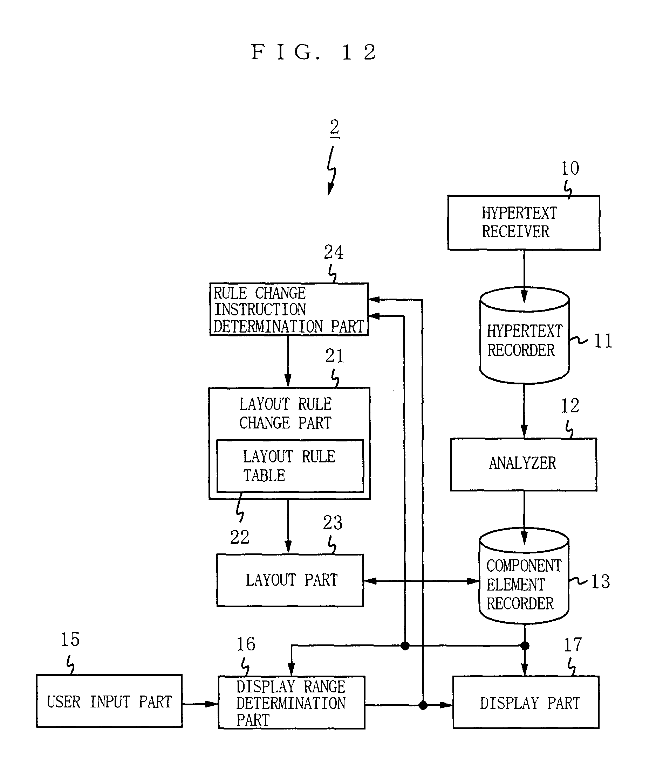

In the present embodiment, the user's key input changes the layout rule. This is not restrictive, and the layout rule may be automatically changed based on the layout result and the display range. FIG. 12 is a block diagram showing the modified structure of the hypertext display device of the first embodiment. In FIG. 12, a hypertext display device 2 is provided with a rule change instruction determination part 24 as an alternative to the rule change instruction input part 20 of the hypertext display device 1 of FIG. 1. The rule change instruction determination part 24 determines, based on the layout result recorded on the component element recorder 13 and the display range determined by the display range determination part 16, whether the current layout rule is to be changed or not. If determined to change, the rule change instruction determination part 24 makes an instruction based on attributes and layout result of the component elements to be displayed. For example, the rule change instruction determination part 24 may be so set in advance as to make the instruction when displayed is the table element or any component element longer in width than the display screen.

In such structure as instructing the layout rule change based on attributes and layout result of the component elements found in the display range, the same effects as the hypertext display device 1 of the first embodiment can be successfully achieved. Further, since the layout rule can be automatically changed, the user has no need to make any instruction for the layout rule change.

### (Second Embodiment)

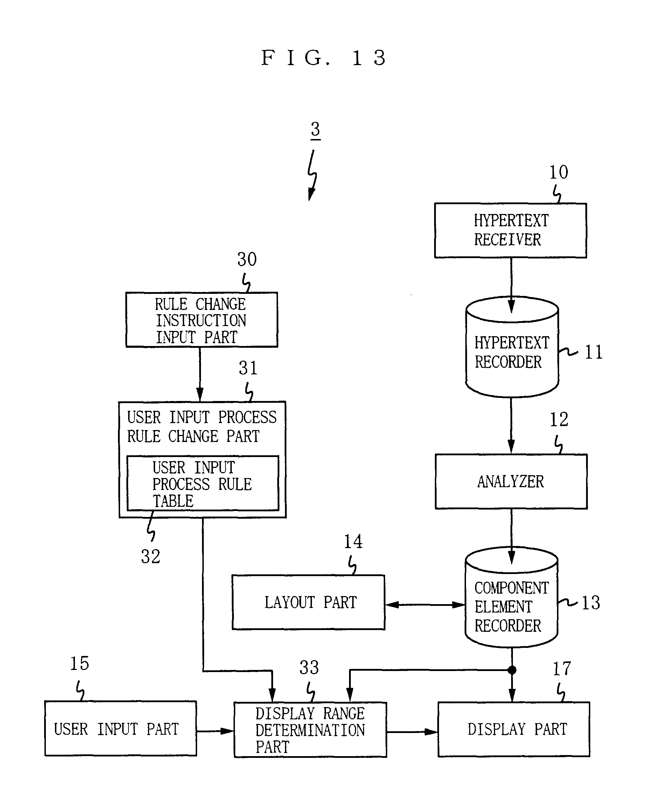

FIG. 13 is a block diagram showing the structure of a hypertext display device according to a second embodiment of the present invention. A hypertext display device 3 of FIG. 13 includes the hypertext receiver 10, the hypertext recorder 11, the analyzer 12, the component element recorder 13, the layout part 14, the user input part 15, a rule change instruction input part 30, a user input process rule change part 31, a display range determination part 33, and the display part 17. The user input process rule change part 31 is provided with a user input process rule table 32, which includes a plurality of user input process rules. The hypertext display device 3 is characterized in changing among the user input process rules corresponding to a user input coming from the rule change instruction input part 30. Here, any constituent similar to that in the first embodiment is under the same reference numeral, and not described again.

The layout part 14 follows a predetermined layout rule, and lays out components recorded on the component element recorder 13.

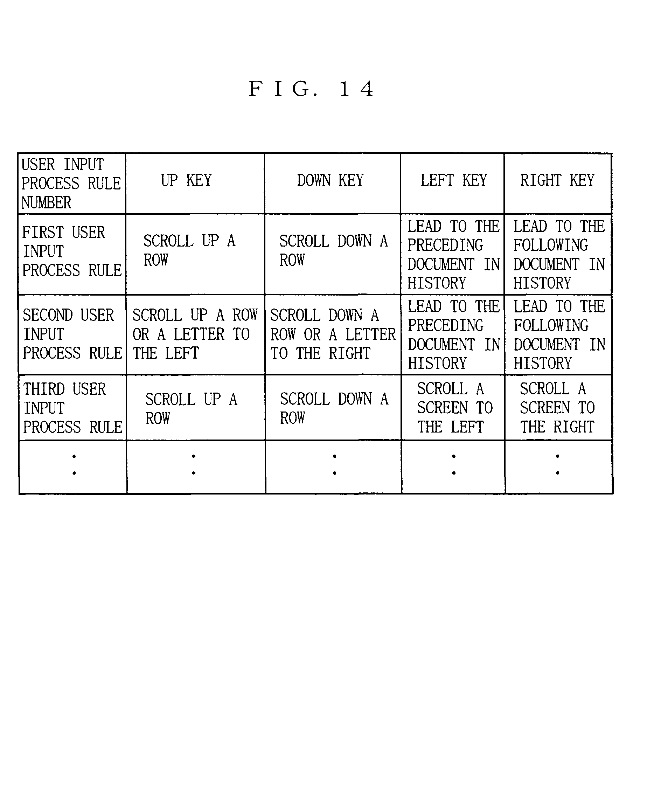

As shown in FIG. 14, the user input process rule table 32 records a plurality of user input process rules to be used in the display range determination part 33. Those user input process rules each define a process assigned to each key input. Here, the user input process rule table 32 is one constituent of the hypertext display device 3 having a function of recording the user input process rules, and is different from a table element included in a hypertext document.

In the user input process rule table of FIG. 14, a first user input process rule defines a process wherein an up key scrolls down a row, a down key scrolls up a row, a right key leads to the following document in a history, and a left key leads to the preceding document in the history. Here, the hypertext display device 3 manages the history of the displayed hypertext. The above expression of "leads to the following document in a history" means an operation of displaying the document which has been displayed after the current document, and the expression of "leads to the preceding document in the history" means an operation of displaying the document which has been displayed before the current document. A second user input process rule defines a process wherein an up key scrolls up a row or to the left by a letter, a down key scrolls down a row or to the right by a letter, and a right key and a left key scroll the same as defined in the first user input process rule. A third user input process rule defines a process wherein an up key and a down key scroll the same as the first user input process rule, and a right key scrolls a screen to the right, and a left key scrolls a screen to the left.

Herein, the table of FIG. 14 is just an example of the user input process rule table, and the number and the contents of the user input process rules therein are generally arbitrary. In the case that the user input part 15 is a joystick or a jogdial, for example, the user input rule change table may previously include a process assigned to any input from the joystick or the jogdial.

The user of the hypertext display device 3 inputs an instruction to the rule change instruction input part 30 for changing the user input process rule. The rule change instruction input part 30 then outputs the inputted instruction to the user input process rule change part 31. Whenever the instruction comes, the user input process rule change part 31 responsively makes a selection from the user input process rule table 32, and outputs the selected user input process rule to the display range determination part 33.

Whenever the instruction for screen switching comes from the user input part 15, the display range determination part 33 determines a new display range by following the user input process rule specified by the user input process rule change part 31. This determination is made by referring to the layout result recorded on the component element recorder 13 on the component element basis.

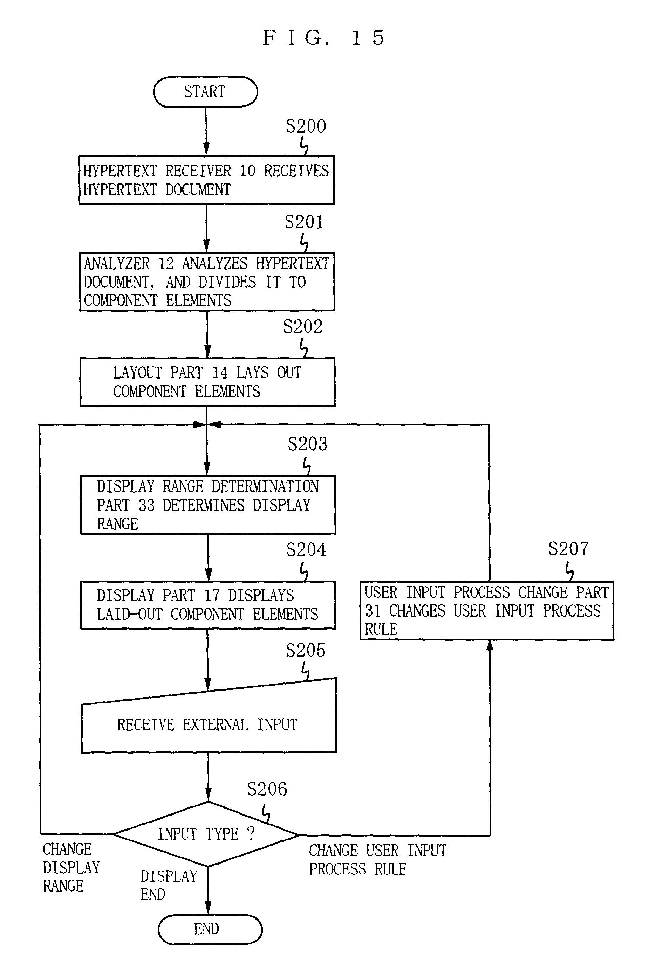

FIG. 15 is a flowchart showing the operation of the hypertext display device 3. Compared with the flowchart of FIG. 5, the flowchart of FIG. 15 includes steps S202, S203, and S207 as alternatives to steps S102, S103, and S107. This is the only difference therebetween, and thus these three steps are mainly described below.

In step S202, the layout part 14 lays out each component element recorded on the component element recorder 13 by following the predetermined layout rule. The resulting layout is recorded onto the component element recorder 13. In step S203, the display range determination part 33 follows the user input process rule specified by the user input process rule change part 31, and determines a new display range. This determination is made by referring to the layout result recorded on the component element recorder 13.

In step S206, if any instruction comes from the rule change instruction input part 30 for the change of user input process rule, the procedure goes to step S207. In step S207, the user input process rule change part 31 makes a selection from the user input process rule table 32, and outputs the selected user input process rule to the display range determination part 33. Then, the procedure goes to step S203 for a new display range.

By referring to FIGS. 6, 7, and 16 to 19, described now are the effects achieved by changing the user input process rule. Considered here is a case of laying out the HTML document of FIG. 2 in accordance with the first layout rule of FIG. 4. FIGS. 6. 16, and 18 show virtual screens derived by applying the first to third user input process rules, respectively. Each virtual screen shows display start points therein. FIGS. 7, 17, and 19 each show the change of the display screen in the case that the HTML document of FIG. 2 is laid out according to the first to third user input process rules.

With the first user input process rule, as shown in FIG. 6, the display start point moves up and down on the virtual screen responding to a key input. With the movement of the display start point, the display screen is so changed as shown in FIG. 7.

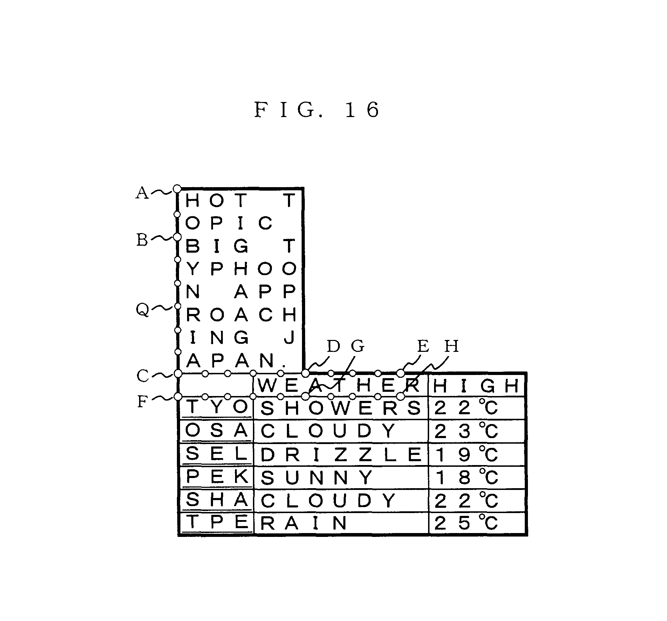

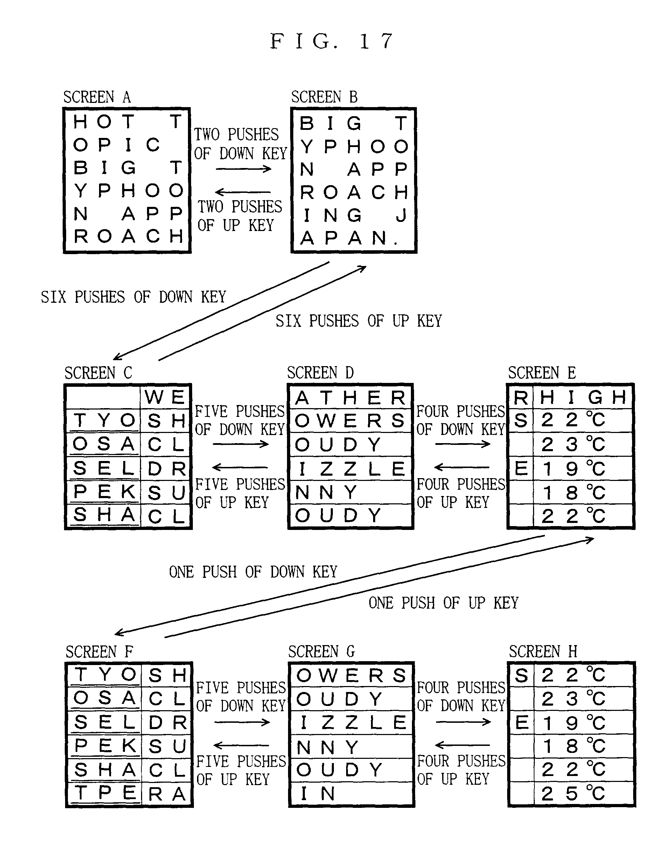

With the second user input process rule, as shown in FIG. 16, the display start point moves down a row or to the right by a letter responding to a push of the down key. Specifically, the display start point moves from a point *A* to points *B, C, D, E, F, G,* and eventually a point *H*. As shown in FIG. 17, when a screen *A* is displayed, two pushes of the down key scroll the screen up by two rows, and a screen *B* is displayed. Six more pushes of the down key lead to a screen *C*. Thereafter, five pushes, four pushes, one push, five pushes, and then four pushes of the down key will display screens *D, E, F, G,* and then a screen *H*.

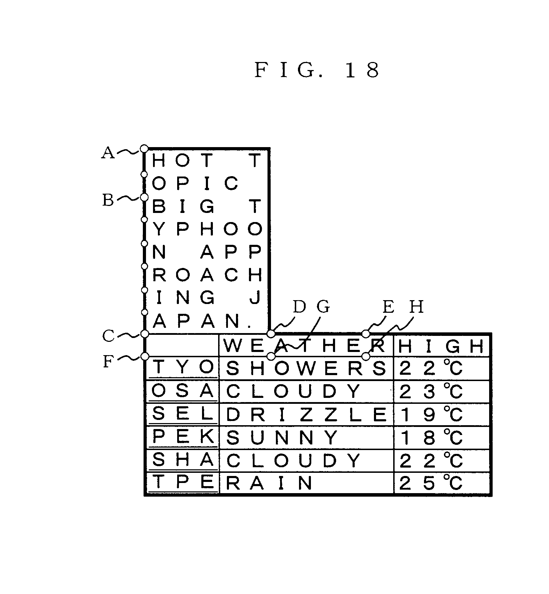

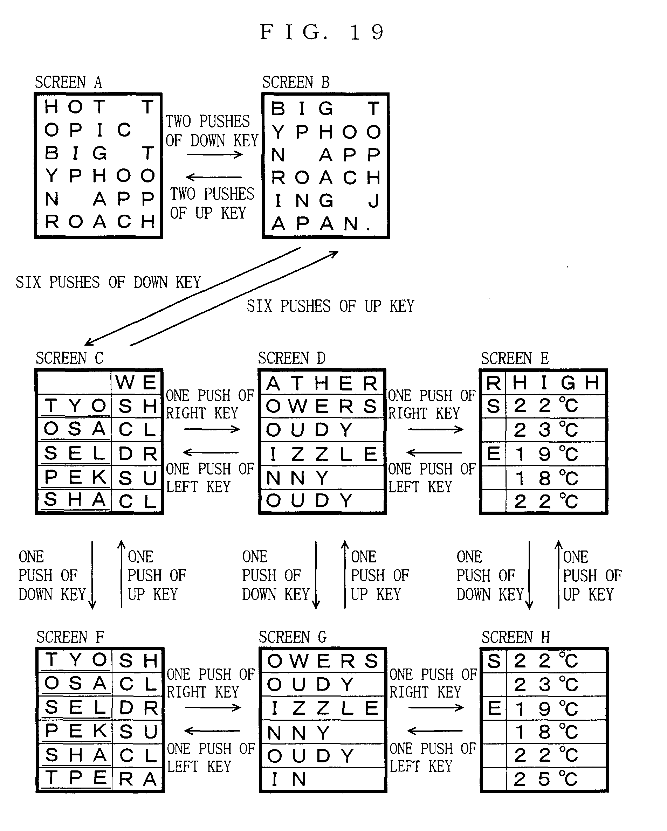

With a third user input process rule, the display start point moves in a range of white circles of FIG. 18. As shown in FIG. 19, when a screen *A* is displayed, two pushes of the down key scroll up the screen by two rows. Then, a screen *B* is displayed. Six more pushes of the down key display a screen *C*. Then, one push of the right key, the display screen scrolls a screen to the right, and a screen *D* appears. One more push of the right key leads to a screen *E*. With the screen *C* displayed, one push of the down key scrolls up the screen a row, and a screen *F* appears. Then, one push of the right key displays a screen *G*, and one more push of the right key leads to a screen *H*. In such case, the display range determination part 33 refers to the layout result recorded on the component element recorder 13, and determines the display range not to include any unwanted part of the virtual screen. As an example, if the right key is pushed once when the screen *B* of FIG. 19 is displayed, the push scrolls a screen to the right, resulting in including any unwanted part of the virtual screen. If this is the case, the display start point will not move, and thus the display screen shows no change.

By changing the current user input process rule to whichever the user prefers, he/she can change the processes each assigned to input keys. With the first user input process rule selected, the display screen scrolls only up and down with the up and down keys, and with the right and left keys, the screen can move to the following document and the preceding document in the history. With the second user input process rule selected, the table element can be entirely displayed by scrolling across the screen by using the up and down keys. With the third input process rule selected, although the screen cannot move to the preceding and the following documents, the table element can be scrolled sideways on a screen basis with the up and down keys so that the table element can be entirely displayed in a shorter time.

As such, according to the hypertext display device of the present embodiment, the inputted hypertext document is divided into a plurality of component elements, and laid out according to a predetermined layout rule. The display range of the hypertext document is determined by the user input process rule, and then screen data of the determined display range is generated for display on the screen. Here, the user input process rule is changed based on the user input.

In this manner, by changing the current user input process rule to another based on the user input, the processes each assigned to the key inputs can be changed. Therefore, if displayed is a table element or an image element longer in width than the display screen, each user input can be processed in an appropriate manner. As a result, the equipment operability can be improved. Also, since a plurality of processes can be assigned to a single key, the number of input keys is accordingly reduced, and thus the equipment can be downsized.

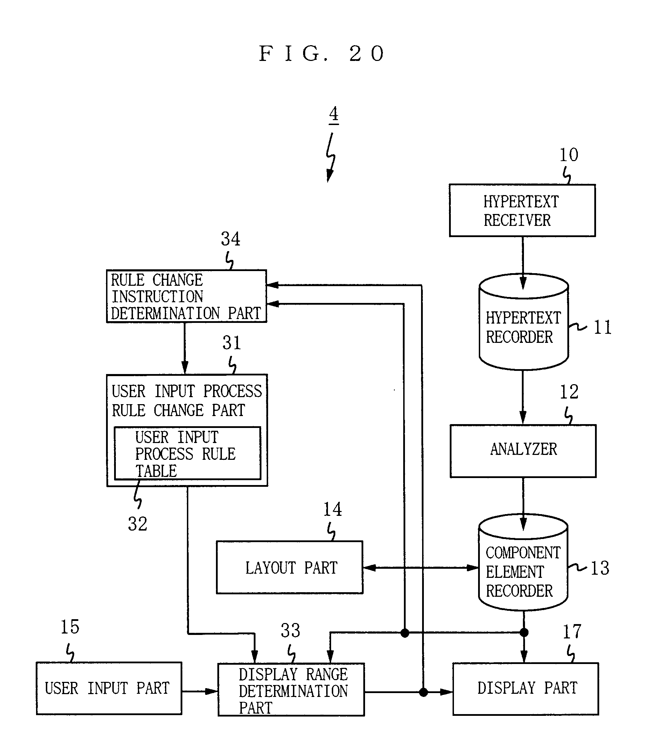

In this second embodiment, as shown in FIG. 20, the modified structure is also applicable as in the first embodiment. As does the rule change instruction determination part 24 of FIG. 12, a rule change instruction determination part 34 of FIG. 20 determines whether the user input process rule is to be changed. This determination is made based on the layout result recorded on the component element recorder 13, and the display range determined by the display range determination part 33. In such structure as instructing the change of user input process rule based on attributes and layout result of the component elements found in the display range, the same effects as the hypertext display device 3 of the second embodiment can be successfully achieved.

### (Third Embodiment)

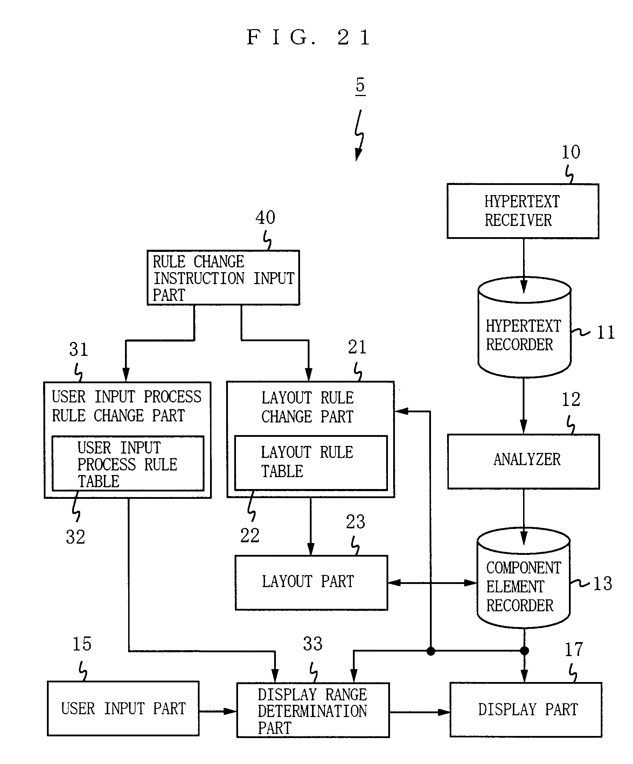

FIG. 21 is a block diagram showing the structure of a hypertext display device according to a third embodiment of the present invention. A hypertext display device 5 of FIG. 21 includes the hypertext receiver 10, the hypertext recorder 11, the analyzer 12, the component element recorder 13, a rule change instruction input part 40, the layout rule change part 21, the layout part 23, the user input part 15, the user input process rule change part 31, the display range determination part 33, and the display part 17. The layout rule change part 21 is provided with the layout rule table 22, which includes a plurality of layout rules. The user input process rule change part 31 is provided with the user input process rule table 32, which includes a plurality of user input process rules. The hypertext display device 5 is characterized in changing the layout rule and the user input process rule at the same time responding to an input coming from the rule change instruction input part 40. Here, any constituent similar to that in the hypertext display devices 1 and 3 of the first and second embodiments is under the same reference numeral, and not described again.

The user of the hypertext display device 5 inputs an instruction to the rule change instruction input part 40 to change the layout rule and the user input process rule. The rule change instruction input part 40 outputs thus inputted instructions to the layout rule change part 21 and the user input process rule change part 31 at the same time.

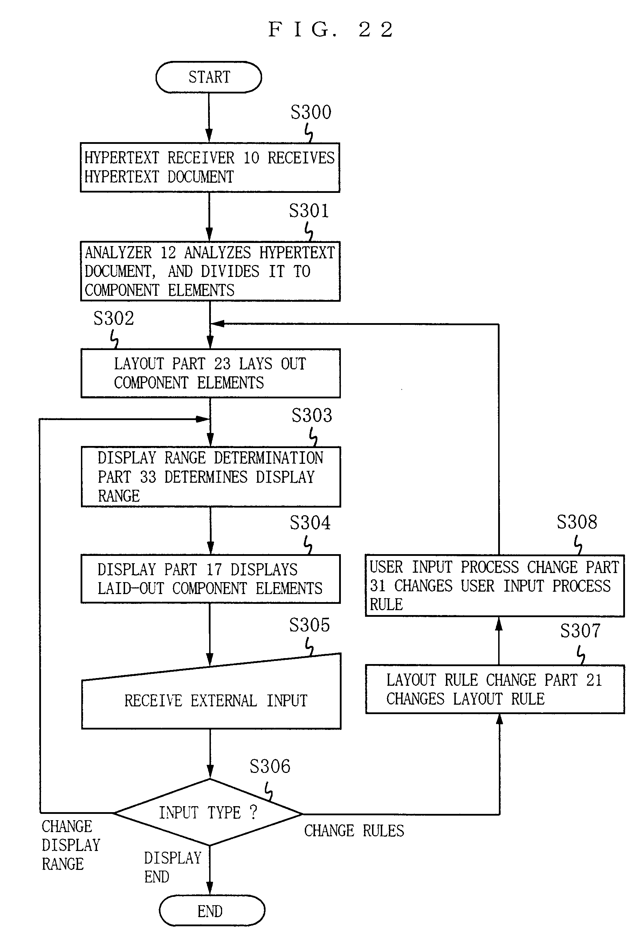

FIG. 22 is a flowchart showing the operation of the hypertext display device 5. The flowchart of FIG. 22 is the one including step S203 of FIG. 15 as an alternative to step S103 of FIG. 5, and additionally including step S308. Thus, described below is only step S308.

In step S308, the user input process rule change part 31 makes a selection from the user input process rule table 32, and outputs the selected user input process rule to the display range determination part 33. Then, the procedure returns to step S302 to repeat the processing with the newly selected layout rule and user input process rule.

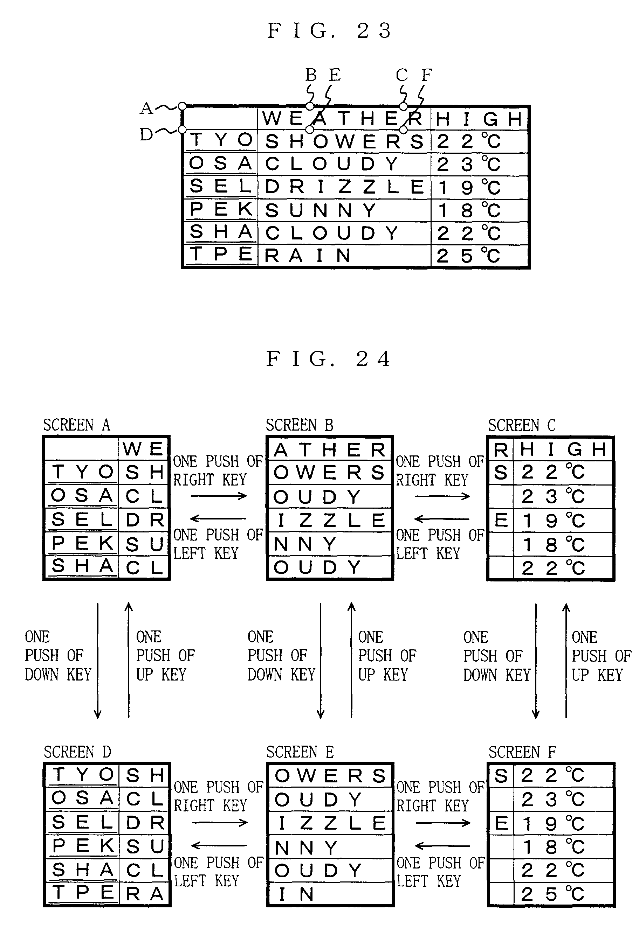

By referring to FIGS. 8, 9, 23, and 24, described now are the effects achieved by changing the layout rule and the user input process rule at the same time. With a first rule setting, the hypertext display device 5 follows the second layout rule of FIG. 4 and the first user input process rule of FIG. 14. With a second rule setting, followed are the third layout rule of FIG. 4 and the third user input process rule of FIG. 14. Under the first rule setting, the resulting virtual screen looks as shown in FIG. 8, and the display screen changes as shown in FIG. 9. Under the second rule setting, the resulting virtual screen looks as shown in FIG. 23, and the display screen changes as shown in FIG. 24. The change between the first and second rule settings is made by a user's input instructing the rule change instruction input part 40 for rule change.

Under a third rule setting, the hypertext display device 5 follows the first layout rule of FIG. 4 and the first user input process rule of FIG. 14. Under the third rule setting, the resulting virtual screen looks as shown in FIG. 6, and the display screen changes as shown in FIG. 7. As such, the hypertext display device 5 may be so set as to display only parts fitting within the screen width.

As described in the foregoing, in the hypertext display device of the present embodiment, the inputted hypertext document is divided into a plurality of component elements, and laid out according to the selected layout rule. The display range of the hypertext document is determined by the selected user input process rule, and then screen data of the determined display range is generated for display on the screen. The layout rule and the user input process rule are interrelated to each other, and changed at the same time.

By changing the layout rule and the user input process rule interrelated to each other at the same time, in addition to the effects achieved by the first and second embodiments, the layout rule and the user input process rule are to be appropriate to each other. Further, as these two rules are changed by a single key input, the number of key pushes can be reduced.

Note that, in the present embodiment, the layout rule and the user input process rule are changed at the same time. This is not restrictive, and both of those rules are not necessarily changed by the user's instruction. This is because the main concern of the present embodiment lies in interrelating the two rules to each other before any change.

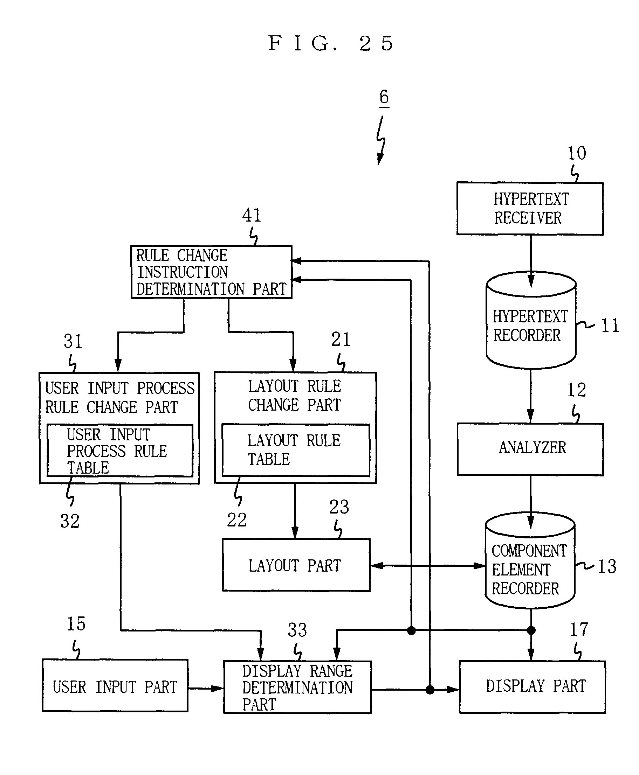

In this third embodiment, as shown in FIG. 25, the modified structure is also applicable as in the first embodiment. As does the rule change instruction determination part 24 of FIG. 12, a rule change instruction determination part 41 of FIG. 25 determines whether the layout rule and the user input process rule are to be changed. This determination is made based on the layout result recorded on the component element recorder 13, and the display range determined by the display range determination part 33. In such structure as instructing the change of layout rule and user input process rule based on attributes and layout result of the component elements found in the display range, the same effects as the hypertext display device 5 of the third embodiment can be successfully achieved.

Here, the present invention is not limited to the technical details described in the above embodiments, and also applicable to another in the below. First, the hypertext document is not restricted to the HTML document exemplified above, and may be a WML (Wireless Markup Language) document, for example. Although exemplified above is the document including the table element, other components as an image element, for example, considered not appropriate to lay out based on the screen width will also do. Further, the layout rules and the user input process rules are not restricted in number, and the tables may carry larger number of rules than those exemplified in the above embodiments. Still further, in the above, the component element is newly laid out every time the layout rule is changed. This is not restrictive, and the layout result may be stored for reference not to repeat the same layout process with the same layout rule.

In the first to third embodiments above, the hypertext display device responds to a key input, and scrolls the display screen by a specific amount under a specific method. However, the scroll method applicable in the present invention varies in type. In the above embodiments, although the display screen is scrolled by a letter and a screen, the amount is not surely restrictive and may be arbitrarily determined, for example, by two letters or a centimeter. Further, in the second embodiment, the display start point moves as shown in FIG. 16, and the screen starts scrolling sideways when the upper end of the table comes at the upper end of the display screen (i.e., the point *C* of FIG. 16). Alternatively, the display screen may start scrolling when a part of the table appears therein. For example, the display screen may scroll also to the right when the display start point reaches a point *Q* of FIG. 16, and when the upper end of the table comes to the middle of the display screen, the screen may start scrolling sideways on a screen basis.

Also, in the first to third embodiments above, the hypertext display device displays the hypertext document entirely on the display screen. Alternatively, the hypertext document may be displayed partially on the display screen (most of the time, on a rectangular region). If this is the case, the specified region is regarded as the display screen to lay out component elements, leading to the same effects achieved by the first to third embodiments.

While the invention has been described in detail, the foregoing description is in all aspects illustrative and not restrictive. It is understood that numerous other modifications and variations can be devised without departing from the scope of the invention.

## Claims

1. A display device (1, 2, 5, 6) for displaying, on a display screen, information specified in a document description language for a structured document, and performing a screen switching in response to a user input, said device comprising:
analysis means (12) for analyzing said information, and dividing said information into a plurality of component elements;
rule change instruction means (20, 24, 40, 41) for making an instruction for a change of layout rules to be applied to said information;
layout rule change means (21) for selecting one of said layout rules responding to the instruction from said rule change instruction means (20, 24, 40, 41);
layout means (23) for laying out each of said component elements derived by said analysis means (12) according to the layout rule selected by said layout rule change means (21);
user input means (15) for receiving the user input;
display range determination means (16, 33) for determining a display range of said information based on said user input; and
display means (17) for generating screen data of the display range determined by said display range determination means (16, 33) based on said component elements derived by said analysis means (12) and a layout result of each of said component elements, and displaying the screen data on the display screen.

2. The display device (1, 2, 5, 6) according to claim 1, wherein said information includes at least one or more of a text element, a table element, and an image element.

3. The display device (1, 2, 5, 6) according to claim 1, wherein said document description language is a markup language or a hypertext description language.

4. The display device (1, 5) according to claim 1, wherein said rule change instruction means (20, 40) receives the user input, and makes the instruction for the change of the layout rules.

5. The display device (2, 6) according to claim 1, wherein said rule change instruction means (24, 41) refers to the display range determined by said display range determination means (16, 33), and makes the instruction for the change of the layout rules based on an attribute of each of said component elements included in the display range.

6. The display device (2, 6) according to claim 1, wherein said rule change instruction means (24, 41) refers to the display range determined by said display range determination means (16, 33), and makes the instruction for the change of the layout rules based on the layout result of each of said component elements included in the display range.

7. The display device (1, 2, 5, 6) according to claim 1, wherein each of said layout rules included in said layout rule change means (21) defines a layout method for each type of said component elements of said information.

8. The display device (1, 2, 5, 6) according to claim 1, wherein the layout rules to be selected by said layout rule change means (21) include one type of layout rule for laying out a table element included in said information in a table structure.

9. The display device (5, 6) according to claim 1, further comprising a user input process rule change means (31) for selecting one of a plurality of user input process rules applicable to said user input according to the instruction from said rule change instruction means (40, 41), wherein
said display range determination means (33) follows the user input process rule selected by said user input process rule change means (31), and determines the display range of said information based on said user input.

10. The display device (5, 6) according to claim 9, wherein said rule change instruction means (40, 41) instructs, at the same time, said layout rule change means (21) for the change of the layout rules, and said user input process rule change means (31) for the change of the user input process rules.

11. A display device (3, 4, 5, 6) for displaying, on a display screen, information specified in a document description language for a structured document, and performing a screen switching in response to a user input, said device comprising:
analysis means (12) for analyzing said information, and dividing said information into a plurality of component elements;
layout means (14, 23) for laying out each of said component elements derived by said analysis means (12);
user input means (15) for receiving the user input;
rule change instruction means (30, 34, 40, 41) for making an instruction for a change of user input process rules to be applied to said user input;
user input process rule change means (31) for selecting one of said user input process rules according to the instruction from said rule change instruction means (30, 34, 40, 41);
display range determination means (33) for following the user input process rule selected by said user input process rule change means (31), and determining a display range of said information based on said user input; and
display means (17) for generating screen data of the display range determined by said display range determination means (33) based on said component elements derived by said analysis means (12) and a layout result of each of said component elements, and displaying the screen data on the display screen.

12. The display device (3, 4, 5, 6) according to claim 11, wherein said information includes at least one or more of a text element, a table element, and an image element.

13. The display device (3, 4, 5, 6) according to claim 11, wherein said document description language is a markup language or a hypertext description language.

14. The display device (3, 5) according to claim 11, wherein said rule change instruction means (30, 40) receives the user input, and makes the instruction for the change of the user input process rules.

15. The display device (4, 6) according to claim 11, wherein said rule change instruction means (34, 41) refers to the display range determined by said display range determination means (33), and makes the instruction for the change of the user input process rules based on an attribute of each of said component elements included in the display range.

16. The display device (4, 6) according to claim 11, wherein said rule change instruction means (34, 41) refers to the display range determined by said display range determination means (33), and makes the instruction for the change of the user input process rules based on a result of each of said component elements included in the display range.

17. The display device (3, 4, 5, 6) according to claim 11, wherein each of said user input process rules included in said user input process rule change means (31) defines a process assigned to each type of said user input.
